# EUROPEAN PATENT SPECIFICATION

(11) **EP 3 351 903 B1**
(45) Date of publication and mention of the grant of the patent: **22.10.2025**
(21) Application number: 17175342.9
(22) Date of filing: 09.06.2017
(51) Int. Cl.: G01C 21/34, A01B 69/00, G01C 21/20, G05D 1/00

(54) **TRAVEL ROUTE GENERATION DEVICE AND A METHOD FOR OPERATING A TRAVEL ROUTE GENERATION DEVICE**
REISEROUTENERZEUGUNGSVORRICHTUNG UND VERFAHREN ZUM BETREIBEN EINER REISEROUTENERZEUGUNGSVORRICHTUNG
DISPOSITIF DE GÉNÉRATION D'ITINÉRAIRE DE VOYAGE ET PROCÉDÉ DE FONCTIONNEMENT D'UN DISPOSITIF DE GÉNÉRATION D'ITINÉRAIRE DE VOYAGE

(30) Priority: 20.01.2017 JP 2017008358
(43) Date of publication of application: 25.07.2018
(73) Proprietor: Kubota Corporation, Osaka-shi, Osaka 556-8601 (JP)
(72) Inventor: Sakaguchi, Kazuo, Hyogo, 6618567 (JP); Shimamoto, Izuru, Hyogo, 6618567 (JP); Tamatani, Kenji, Hyogo, 6618567 (JP); Suzukawa, Megumi, Hyogo, 6618567 (JP); Shinkai, Atsushi, Osaka, 5900823 (JP)
(74) Representative: Bittner, Thomas L.

(56) References cited:
- WO-A1-2015/119264
- CN-B- 102 167 038
- JP-A- 2016 189 791
- US-A1- 2016 031 447

## Description

The present disclosure relates to a travel route generation device that generates a travel route along which a work vehicle travels, and a method for operating a travel route generation device.

### Background

For example, the document JP H10-243708 describes a conventional travel route generation device. The travel route generation device described in such document generates a travel route along which a work vehicle travels in a field.

However, the above-described conventional technology does not display, when a travel route is generated, information regarding the travel route such as how much time and effort are needed when a work vehicle actually travels using the generated travel route. Therefore, an operator cannot obtain sufficient information regarding the generated travel route, making it difficult to set a travel route that meets a request from the operator.

JP 2016 189791 A discloses a field guidance system capable of generating any travel route based on every working condition and based on field polygon data. The field guidance system displays a background map in addition to the display of a field division and the generated route on a guidance screen.

WO 2015/119264 A1 discloses a travel work system with an autonomous travel work vehicle, which is caused to autonomously travel along a set travel path. A remote operation device is provided that can operate the autonomous travel work vehicle. The travel state, engine state, and work machine state of the autonomous travel work vehicle can be displayed at a display provided to the remote operation device. CN 102 167 038 B discloses a method of providing multiple operating path optimization standards for a tractor unit, and realizing optimization targets such as minimum turning, lowest turning working consumption, a shortest working path, an optimal effective working path ratio and the like.

### Summary

It is an object of the present disclosure to provide a travel route generation device and a method for operating a travel route generation device allowing for more easily setting a travel route that meets the request from the operator.

For solving the problem, a travel route generation device according to the independent claim 1 is provided. Further, a method for operating a travel route generation device according to the independent claim 7 is provided. Alternative embodiments are disclosed in the dependent claims.

The technologies proposed make it possible to arbitrarily set a travel work parameter including headland information by an operator's manual operation. For example, the headland information includes information such as a headland work count and a headland width that can be set by a headland lap margin or the like. The operator can set appropriate headland information depending on details of the work. When the travel work parameter is set, the display device displays the travel route based on the travel work parameter and the route expectation information about the travel route, in addition to the field shape. The operator can quickly determine whether or not the generated travel route meets a request by referring to the route expectation information. When the travel work parameter is set again, the display device displays updated new travel route based on new travel work parameter and new route expectation information about the new travel route. This allows the operator to easily set the travel route that meets a request by adjusting the travel work parameter while referring to the route expectation information.

Thus, an easy setting of the travel route that meets the operator's request is allowed.

The route expectation unit may derive an expected work distance about the travel route to be generated as the route expectation information, and the display control unit causes the display device to display the derived expected work distance.

With this configuration, since the display device displays the expected work distance about the generated travel route, for example, checking the expected work distance against residual fuel quantity and rough fuel efficiency makes it easy for the operator to make a work plan, such as making it easy to predict timing of refueling during work.

The setting unit may allow setting of a travel vehicle speed as part of the travel work parameter, the route expectation unit derives expected work time about the travel route to be generated based on the travel vehicle speed as the route expectation information, and the display control unit causes the display device to display the derived expected work time.

With this configuration, setting the travel vehicle speed as part of the travel work parameter causes the display device to display the expected work time about the generated travel route. This makes it easy for the operator to make a work plan on the basis of the expected work time, for example, this makes it easy to predict whether or not work will be completed in one day, and when the rough work finish time will be.

A recommendation assignment unit is further provided capable of collectively assigning, based on a manual operation, a recommended parameter with which the travel route has a shortest distance, the recommended parameter being generated as the travel work parameter.

With this configuration, setting the recommended parameter as the travel work parameter allows setting of the travel route having the shortest distance. Since this recommended parameter can be collectively assigned based on a manual operation as the travel work parameter, time and effort of the operator can be reduced, for example, when compared with a case of searching by trial and error for a condition under which the travel route with the shortest distance is generated while resetting values individually for each item.

A previous assignment unit may further be provided capable of collectively assigning, based on a manual operation, a previous parameter that is previously used as the travel work parameter.

With this configuration, setting the previous parameter as the travel work parameter allows reproduction of work similar to work performed previously. Since this previous parameter can be collectively assigned based on a manual operation as the travel work parameter, time and effort of the operator can be reduced, for example, when compared with a case of individually resetting values for each item to restore the previous parameter.

A collision determination unit may further be provided that determines whether or not there is a collision possibility of colliding with part of the field when the work vehicle actually travels along the travel route, wherein when the collision determination unit determines that the collision possibility is present, the display control unit causes the display device to display the collision possibility determined by the collision determination unit.

With this configuration, in a stage of generating the travel route, the display device displays, when the work vehicle actually travels along the generated travel route, whether or not there is any collision possibility of colliding with a ridge or the like that is part of the field. For example, although there is a possibility from data that the work vehicle collides with a ridge during rotation of the work vehicle near the ridge, collision may not occur in the actual field. Therefore, display is made as a collision possibility. On the basis of the display of the collision possibility, the operator can evaluate validity of the generated travel route, and grasp in advance a position where caution is needed during work.

The alternative embodiments outlined above may apply to the method for operating a travel route generation device *mutatis mutandis.*

### Description of embodiments

- Fig. 1: is a side view illustrating one example of a configuration of a tractor;
- Fig. 2: is a block diagram schematically illustrating a configuration of a travel route generation device;
- Fig. 3: is a diagram illustrating a travel route and the like generated by the travel route generation device.

Exemplary embodiments will be described below with reference to the drawings.

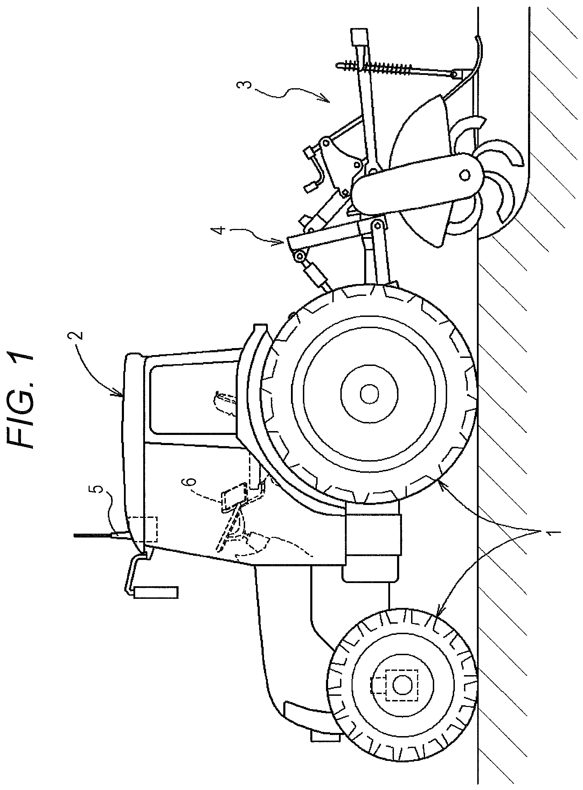

As illustrated in Fig. 1, a tractor (one example of "work vehicle") includes components such as a four-wheel travel device 1 that causes a machine body to travel, a driving unit 2 that allows an operator to get in and perform a driving operation, a work device 3 that can perform ground work on a field, a lifting and coupling mechanism 4 that couples the work device 3 to this machine of the machine body liftably and shakably around a longitudinal shaft center, a mobile station 5 that can receive GNSS position information, and a travel route generation device 6 that can perform various operation inputs and information presentations.

Following, further aspects about the travel route generation device 6 are described.

As illustrated in Fig. 1, the travel route generation device 6 is provided in the driving unit 2. That is, the travel route generation device 6 is a vehicle-mounted device fixed to the driving unit 2 of the tractor.

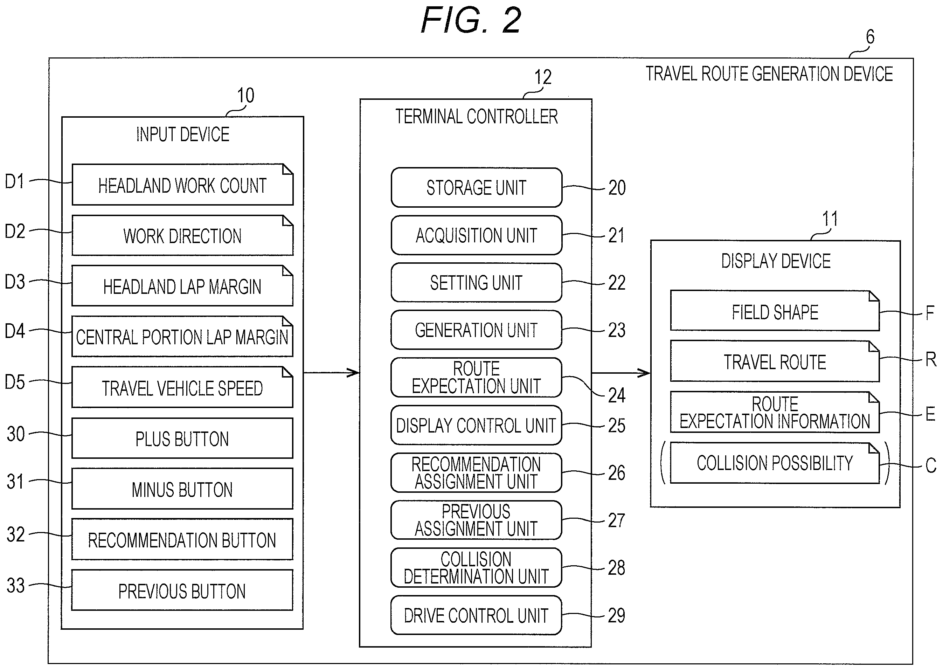

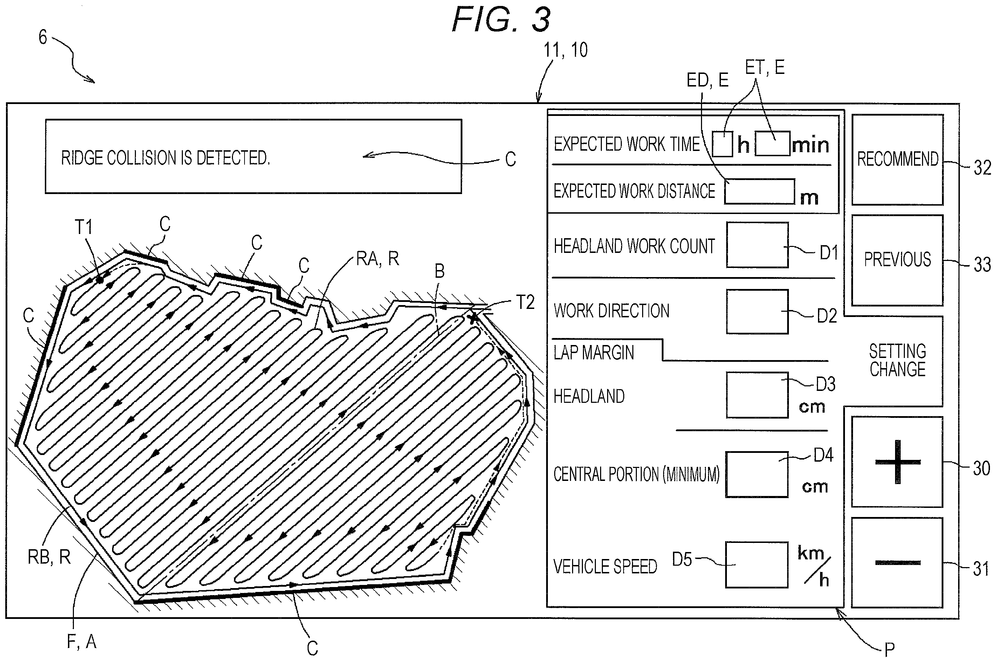

As illustrated in Figs. 2 and 3, the travel route generation device 6 includes an input device 10 that can input information by an operation such as a touch operation on a screen, a display device 11 that can display information, and a terminal controller 12 that performs various types of control. That is, the travel route generation device 6 is a touch-panel operation terminal.

As illustrated in Fig. 2, the terminal controller 12 includes a storage unit 20 that stores various pieces of data, an acquisition unit 21 that acquires field data including a field shape F, a setting unit 22 that can set travel work parameters P including headland information on the basis of a manual operation, a generation unit 23 that generates a travel route R along which the tractor travels on the basis of the field data and the travel work parameters P, and a route expectation unit 24 that derives route expectation information E about the generated travel route R.

In addition, as illustrated in Fig. 2, the terminal controller 12 includes a display control unit 25 that causes the display device 11 capable of displaying information to display the acquired field shape F, the generated travel route R, and the derived route expectation information E, a recommendation assignment unit 26 that collectively assigns, on the basis of a manual operation, recommended parameters with which the travel route R generated as the travel work parameters P has the shortest distance, a previous assignment unit 27 that can collectively assign, on the basis of a manual operation, previous parameters used previously as the travel work parameters P, a collision determination unit 28 that determines whether or not there is collision possibility C of colliding with part of the field when the tractor actually travels along the travel route R, and a drive control unit 29 that outputs a control signal to a machine body controller of the tractor.

The storage unit 20 illustrated in Fig. 2 stores field data in which a field size, the field shape F, GNSS position information at each point, and other information are associated with each other on a field-by-field basis. The acquisition unit 21 illustrated in Fig. 2 acquires the field data from the storage unit 20. The setting unit 22 illustrated in Fig. 2 is configured to set the travel work parameters P on the basis of operational input of the input device 10 or the like. The setting unit 22 can set a travel vehicle speed D5 as part of the travel work parameters P.

The generation unit 23 illustrated in Fig. 2 is configured to generate the travel route R along which the tractor travels on the basis of the field data and the travel work parameters P. As illustrated in Figs. 2 and 3, the route expectation unit 24 is configured to derive an expected work distance ED about the travel route R generated by the generation unit 23 as the route expectation information E. In addition, the route expectation unit 24 is configured to derive an expected work time ET about the travel route R generated as the route expectation information E on the basis of the travel vehicle speed D5.

As illustrated in Figs. 2 and 3, the display control unit 25 causes the display device 11 to display the derived expected work distance ED. In addition, the display control unit 25 causes the display device 11 to display the derived expected work time ET. When the collision determination unit 28 determines that the collision possibility C is present, the display control unit 25 causes the display device 11 to display the collision possibility C determined by the collision determination unit 28.

As illustrated in Fig. 2, the drive control unit 29 is configured to output a control signal to the machine body controller of the tractor on the basis of the travel route R generated by the generation unit 23 and the travel work parameters P. The machine body controller performs drive and steering control of the travel device 1 and the like on the basis of the control signal that is input from the drive control unit 29.

In the present exemplary embodiment, the recommended parameters assigned by the recommendation assignment unit 26, which are collectively assigned as the travel work parameters P and the previous parameters assigned by the previous assignment unit 27, which can be collectively assigned as the travel work parameters P, are configured such that the collision possibility C can occur in the generated travel route R. Following, further alternative aspects about the generation of travel route are described.

To begin with, information regarding a type of this machine is input on the basis of a manual operation of the input device 10. Accordingly, size information regarding this machine can be obtained (such as a machine body width of this machine, a longitudinal machine body length of this machine, a disposition place of the travel device 1 in this machine).

Next, information regarding a type of the work device 3 is input on the basis of a manual operation. Accordingly, size information regarding the work device 3 can be obtained (such as a work width of the work device 3, a longitudinal length of the work device 3, an attachment position of the work device 3 to this machine).

Next, the acquisition unit 21 acquires the field data about the field to be worked from the storage unit 20 illustrated in Fig. 2. The field data has been registered in advance.

Next, as illustrated in Fig. 3, the travel route generation device 6 displays a route creation screen. In the route creation screen, as items of the travel work parameters P, a headland work count D1 of performing round work, such as round about plowing, a work direction D2 that is a rotation direction of the tractor, a headland lap margin D3 in headland work, a central portion lap margin D4 in central portion work, and the travel vehicle speed D5 at which the tractor travels can be input. The headland work count D1 and the headland lap margin D3 are headland information. A headland width is determined on the basis of the headland work count D1, the headland lap margin D3, and the work width of the work device 3.

When numerical values are input into all the items in which the travel work parameters P can be input by operations, as illustrated in Fig. 3, the travel route R is generated on the basis of the travel work parameters P.

As illustrated in Fig. 3, the travel route R to be generated includes a central portion route RA along which reciprocating work travel is performed in the central portion of the field, and a headland route RB along which work travel is performed in the headland surrounding the central portion route RA. A straight line section of the central portion route RA is parallel to a reference straight line B that is set in advance. In addition, the travel route R to be generated includes a work start point T1 where work travel is started, and a work end point T2 where work travel is ended.

As illustrated in Fig. 3, the display device 11 displays the generated travel route R and the route expectation information E associated with the travel route R. For additional description, as the route expectation information E, the expected work distance ED and the expected work time ET about the generated travel route R are displayed. In addition, in association with the generated travel route R, in a case where there is a possibility of collision with part of a ridge of the field or the like when the actual tractor collides with the travel route R, the collision possibility C is displayed. As illustrated in Fig. 3, the collision possibility C is displayed as a line in each straight line section of an edge of the external shape of the field. In addition, as illustrated in Fig. 3, a message is also displayed together as the collision possibility C, such as "ridge collision is detected."

As illustrated in Fig. 3, the input device 10 is provided with screen buttons and entry fields on the route creation screen. As the screen buttons, a plus button 30 that increases a numerical value by a touch operation, a minus button 31 that decreases a numerical value by a touch operation, a recommendation button 32 that collectively assigns the recommended parameters as the travel work parameters P, and a previous button 33 that collectively assigns previous parameters as the travel work parameters P. Each entry field enables input of an individual numerical value of each item of the travel work parameters P on the basis of an operation on the plus button 30 and the minus button 31. Performing a touch operation on the entry field of each travel work parameter P enables change in the numerical value of the individual item. Operations of the plus button 30 and the minus button 31 enable increase and decrease in the numerical value of each item, respectively.

When the numerical value of each item is changed by the operation of the plus button 30 or the minus button 31 illustrated in Fig. 3, the travel route R is generated again and immediately displayed on the basis of the changed travel work parameters P, and in response to this, the route expectation information E (expected work distance ED, expected work time ET) and the collision possibility C are generated again, immediately updated and displayed.

This enables the operator to appropriately evaluate validity of the generated travel route R on the basis of the travel route R, the route expectation information E, and the collision possibility C, which are displayed again every time the travel work parameters P are changed, and to set the travel route R that meets an object.

Thus, it is possible to cause the tractor to travel automatically in the field on the basis of the travel route R generated by the travel route generation device 6 and the GNSS information received by the mobile station 5, and to perform ground work (such as tilling and tilling before transplantation) by the work device 3. The present exemplary embodiment is configured to perform travel control of the tractor by complete automatic travel by which rotation of the tractor is also performed automatically.

In addition, the travel of the tractor is temporarily and automatically stopped immediately before a place where the collision possibility C is present in the travel route R.

Following, alternative embodiments are described:
Other exemplary embodiments obtained by adding changes to the above-described exemplary embodiment will be described below. A combination of the plurality of following other exemplary embodiments is applicable to the above-described exemplary embodiment, provided that no contradictions arise. Note that the scope of the present invention is not limited to details indicated in each exemplary embodiment.
(1) The above-described exemplary embodiment has described an example in which the travel route R for one tractor is generated, which is not restrictive. For example, in a case where a plurality of tractors perform cooperation work in the field, the travel routes R for the number of tractors may be generated, and expected work information about the travel routes R and the collision possibility C about the travel routes R may be displayed.
(2) The above-described exemplary embodiment has described an example in which the expected work distance ED and the expected work time ET are displayed as the route expectation information E, which is not restrictive. For example, other information may be displayed as the route expectation information E, such as a refueling point and time to running out of fuel.
(3) The above-described exemplary embodiment has described an example in which the previous parameters can be collectively assigned on the basis of a manual operation as the travel work parameters P, which is not restrictive. For example, after a condition of avoiding collision with part of the field is added on the basis of a manual operation as the travel work parameters P, avoidance parameters for generating the travel route R with the shortest distance may be able to be assigned collectively. In this case, an avoidance assignment unit for collectively assigning the avoidance parameters by an operation as the travel work parameters P, and an avoidance assignment button for operational input are provided.
(4) The above-described exemplary embodiment has described an example in which the previous parameters can be collectively assigned as the travel work parameters P, which is not restrictive. For example, in order to change the travel work parameters P, it is not necessary that the collective assignment function of parameters is provided.
(5) The above-described exemplary embodiment has described an example in which the collision possibility C is displayed in each straight line section of the external shape of the field, which is not restrictive. For example, the collision possibility C may be pinpointed as a point in the external shape of the field.
(6) The above-described exemplary embodiment has described an example in which the collision possibility C is displayed when the travel route R is generated, which is not restrictive. The collision possibility C does not need to be displayed when the travel route R is generated.
(7) The above-described exemplary embodiment has described an example in which the travel route generation device 6 is a vehicle-mounted device fixed to the driving unit 2 of the tractor, which is not restrictive. For example, the travel route generation device 6 may be portable that can be carried out of the tractor. In addition, as the travel route generation device 6, two devices may be provided including a vehicle-mounted device and a portable device, and these two devices may be used together. Alternatively, the travel route generation device 6 may be provided as a stationary control computer provided at a remote place distant from the tractor. In this case, the tractor is separately provided with a vehicle-mounted or portable display device, the stationary travel route generation device 6 transmits information to the display device by telecommunication, and the display device displays various pieces of information such as the travel route R and the route expectation information E.
(8) The above-described exemplary embodiment has described an example in which the travel route generation device 6 includes the display device 11 and the input device 10, which is not restrictive. For example, the travel route generation device 6, and the display device 11 and the input device 10 may be provided as different bodies and connected data-exchangeably.
(9) The above-described exemplary embodiment has described an example in which the travel route generation device 6 includes the storage unit 20 that stores the field data, which is not restrictive. For example, the field data may not be stored in the travel route generation device 6, and the acquisition unit 21 of the travel route generation device 6 may acquire the field data from another device that stores the field data.
(10) The above-described exemplary embodiment has described an example in which the tractor is temporarily stopped immediately before a position at which the collision possibility C is present in the travel route R, which is not restrictive. For example, the tractor may not be stopped even at a position where the collision possibility C is present in the travel route R. In this case, the operator determines whether to stop the tractor or not.
(11) The above-described exemplary embodiment has described an example in which, when the tractor travels along the travel route R, travel control of the tractor is performed by complete automatic travel by which rotation of the tractor is also performed automatically, which is not restrictive. For example, when the tractor travels along the travel route R, travel control of the tractor may be performed by semiautomatic travel by which straight movement of the tractor is performed automatically and rotation of the tractor is performed manually.
(12) The above-described exemplary embodiment has described an example in which the tractor includes the four-wheel travel device 1, which is not restrictive. For example, the four-wheel travel device 1 may be replaced with a crawler type travel device 1 or a semi crawler type travel device 1.
(13) The above-described exemplary embodiment has described an example of performing a touch operation on a screen as the input device 10, which is not restrictive. For example, instead of this, the input device 10 in which physical buttons are operated or the input device 10 in which operations of physical buttons and the touch operation on a screen are used together may be used.

The alternative embodiments can be used for the travel route generation device that generates the travel route for the work vehicle that travels in the field, such as agricultural vehicles including combines and rice transplanters, in addition to the above-described tractor. The features disclosed in this specification and the figures may be material for the realization of various embodiments, taken in isolation or in various combinations thereof, within the scope defined by the appended claims.

### Reference signs

- 6:: travel route generation device
- 11:: display device
- 21:: acquisition unit
- 22:: setting unit
- 23:: generation unit
- 24:: route expectation unit
- 25:: display control unit
- 26:: recommendation assignment unit
- 27:: previous assignment unit
- 28:: collision determination unit
- C:: collision possibility
- D5:: travel vehicle speed
- E:: route expectation information
- ED:: expected work distance
- ET:: expected work time
- F:: field shape
- P:: travel work parameter
- R:: travel route

## Claims

1. A travel route generation device (6) comprising:
- an acquisition unit (21) that is configured to acquire field data including a field shape (F);
- a setting unit (22) configured to set travel work parameters (P) including headland information based on a manual operation of an input device (10);
- a generation unit (23) that is configured to generate a travel route (R) along which a work vehicle travels based on the field data and the travel work parameters (F);
- a route expectation unit (24) that is configured to derive route expectation information (E) about the generated travel route (R); and
- a display control unit (25) that is configured to cause a display device (11) capable of displaying information to display the acquired field shape (F), the generated travel route (R), and the derived route expectation information (E),
**characterized in that** the travel route generation device further comprises:
- a recommendation assignment unit (26) configured to collectively assign, based on a manual operation of a recommendation button (32) on the input device (10), recommended parameters with which the travel route (R) has a shortest distance, the recommended parameters being generated as the travel work parameters (P).

2. The travel route generation device according to claim 1, wherein the route expectation unit (24) is configured to derive an expected work distance (ED) about the travel route (R) to be generated as the route expectation information (E), and the display control unit (25) is configured to cause the display device (11) to display the derived expected work distance (ED).

3. The travel route generation device according to claim 1 or 2, wherein the setting unit (22) allows setting of a travel vehicle speed (D5) as part of the travel work parameters (P), the route expectation unit (24) is configured to derive expected work time (ET) about the travel route (R) to be generated based on the travel vehicle speed (D5) as the route expectation information (E), and the display control unit (25) is configured to cause the display device (11) to display the derived expected work time (ET).

4. The travel route generation device according to any one of claims 1 to 3, further comprising a previous assignment unit (27) capable of collectively assigning, based on a manual operation, previous parameters that were previously used as the travel work parameters (P).

5. The travel route generation device according to any one of claims 1 to 4, further comprising a collision determination unit (28) that is configured to determine whether or not there is a collision possibility (C) of colliding with part of the field when the work vehicle actually travels along the travel route (R), wherein when the collision determination unit (28) determines that the collision possibility (C) is present, the display control unit (25) is configured to cause the display device (11) to display the collision possibility (C) determined by the collision determination unit (28).

6. The travel route generation device according to any one of claims 1 to 5, further comprising the input device (10) and the display device (11).

7. A method for operating a travel route generation device (6), comprising:
- acquiring field data including a field shape (F) by an acquisition unit (21);
- setting, by a setting unit (22), travel work parameters (P) including headland information based on a manual operation of an input device (10);
- generating, by a generation unit (23), a travel route (R) along which a work vehicle travels based on the field data and the travel work parameters (P);
- deriving, by a route expectation unit (24), route expectation information (E) about the generated travel route (R); and
- causing, by a display control unit (25), a display device (11) capable of displaying information to display the acquired field shape (F), the generated travel route (R), and the derived route expectation information (E),
**characterized in that** the method further comprises:
- collectively assigning, by a recommendation assignment unit (26), based on a manual operation of a recommendation button (32) on the input device (10), recommended parameters with which the travel route (R) has a shortest distance, the recommended parameters being generated as the travel work parameters (P).

## Patentansprüche

1. Fahrroutenerstellungsvorrichtung (6) umfassend:
- eine Erfassungseinheit (21), die eingerichtet ist, Felddaten einschließlich einer Feldform (F) zu erfassen;
- eine Einstelleinheit (22), die eingerichtet ist, Fahrarbeitsparameter (P) einschließlich Vorgewendeinformationen basierend auf einer manuellen Betätigung einer Eingabevorrichtung (10) einzustellen;
- eine Erstellungseinheit (23), die eingerichtet ist, eine Fahrroute (R), entlang welcher ein Arbeitsfahrzeug fährt, basierend auf den Felddaten und den Fahrarbeitsparametern (F) zu erstellen;
- eine Routenerwartungseinheit (24), die eingerichtet ist, Routenerwartungsinformationen (E) über die erstellte Fahrroute (R) abzuleiten; und
- eine Anzeigesteuereinheit (25), die eingerichtet ist, zu bewirken, dass eine Anzeigevorrichtung (11), die in der Lage ist, Informationen anzuzeigen, die erfasste Feldform (F), die erstellte Fahrroute (R) und die abgeleiteten Routenerwartungsinformationen (E) anzuzeigen,
**dadurch gekennzeichnet, dass** die Fahrroutenerstellungsvorrichtung ferner Folgendes umfasst:
- eine Empfehlungszuweisungseinheit (26), die eingerichtet ist, basierend auf einer manuellen Betätigung einer Empfehlungsschaltfläche (32) auf der Eingabevorrichtung (10) empfohlene Parameter kollektiv zuzuweisen, mit welchen die Fahrroute (R) eine kürzeste Distanz aufweist, wobei die empfohlenen Parameter als die Fahrarbeitsparameter (P) erstellt werden.

2. Fahrroutenerstellungsvorrichtung nach Anspruch 1, wobei die Routenerwartungseinheit (24) eingerichtet ist, eine erwartete Arbeitsdistanz (ED) über die zu erstellende Fahrroute (R) als die Routenerwartungsinformationen (E) abzuleiten, und die Anzeigesteuereinheit (25) eingerichtet ist, zu bewirken, dass die Anzeigevorrichtung (11) die abgeleitete erwartete Arbeitsdistanz (ED) anzeigt.

3. Fahrroutenerstellungsvorrichtung nach Anspruch 1 oder 2, wobei die Einstellungseinheit (22) ein Einstellen einer Fahrzeugfahrgeschwindigkeit (D5) als Teil der Fahrarbeitsparameter (P) erlaubt, die Routenerwartungseinheit (24) eingerichtet ist, die erwartete Arbeitszeit (ET) über die zu erstellende Fahrroute (R) basierend auf der Fahrzeugfahrgeschwindigkeit (D5) als die Routenerwartungsinformationen (E) abzuleiten, und die Anzeigesteuereinheit (25) eingerichtet ist, zu bewirken, dass die Anzeigevorrichtung (11) die abgeleitete erwartete Arbeitszeit (ET) anzeigt.

4. Fahrroutenerstellungsvorrichtung nach einem der Ansprüche 1 bis 3, ferner umfassend eine Vorherige-Zuweisungseinheit (27), die in der Lage ist, basierend auf einer manuellen Betätigung vorherige Parameter kollektiv zuzuweisen, die zuvor als die Fahrarbeitsparameter (P) verwendet wurden.

5. Fahrroutenerstellungsvorrichtung nach einem der Ansprüche 1 bis 4, ferner umfassend eine Kollisionsbestimmungseinheit (28), die eingerichtet ist, zu bestimmen, ob eine Kollisionsmöglichkeit (C) des Kollidierens mit einem Teil des Felds vorhanden ist oder nicht, wenn das Arbeitsfahrzeug tatsächlich entlang der Fahrroute (R) fährt, wobei, wenn die Kollisionsbestimmungseinheit (28) bestimmt, dass die Kollisionsmöglichkeit (C) vorhanden ist, die Anzeigesteuereinheit (25) eingerichtet ist, zu bewirken, dass die Anzeigevorrichtung (11) die Kollisionsmöglichkeit (C) anzeigt, die durch die Kollisionsbestimmungseinheit (28) bestimmt wird.

6. Fahrroutenerstellungsvorrichtung nach einem der Ansprüche 1 bis 5, ferner umfassend die Eingabevorrichtung (10) und die Anzeigevorrichtung (11).

7. Verfahren zum Betreiben einer Fahrroutenerstellungsvorrichtung (6), umfassend:
- Erfassen von Felddaten einschließlich einer Feldform (F) durch eine Erfassungseinheit (21);
- Einstellen, durch eine Einstelleinheit (22), von Fahrarbeitsparametern (P) einschließlich Vorgewendeinformationen basierend auf einer manuellen Betätigung einer Eingabevorrichtung (10);
- Erstellen, durch eine Erstellungseinheit (23), einer Fahrroute (R), entlang welcher ein Arbeitsfahrzeug fährt, basierend auf den Felddaten und den Fahrarbeitsparametern (P);
- Ableiten, durch eine Routenerwartungseinheit (24), von Routenerwartungsinformationen (E) über die erstellte Fahrroute (R); und
- Bewirken, durch eine Anzeigesteuereinheit (25), dass eine Anzeigevorrichtung (11), die in der Lage ist, Informationen anzuzeigen, die erfasste Feldform (F), die erstellte Fahrroute (R) und die abgeleiteten Routenerwartungsinformationen (E) anzeigt,
**dadurch gekennzeichnet, dass** das Verfahren ferner Folgendes umfasst:
- kollektives Zuweisen, durch eine Empfehlungszuweisungseinheit (26), basierend auf einer manuellen Betätigung einer Empfehlungsschaltfläche (32) auf der Eingabevorrichtung (10), von empfohlenen Parametern, mit welchen die Fahrroute (R) eine kürzeste Distanz aufweist, wobei die empfohlenen Parameter als die Fahrarbeitsparameter (P) erstellt werden.

## Revendications

1. Dispositif de génération d'itinéraire de voyage (6) comprenant :
- une unité d'acquisition (21) qui est configurée pour acquérir des données de terrain comprenant une forme de terrain (F) ;
- une unité de réglage (22) configurée pour régler des paramètres de travail de déplacement (P) comprenant des informations de bandeau sur la base d'une opération manuelle d'un dispositif de saisie (10) ;
- une unité de génération (23) qui est configurée pour générer un itinéraire de voyage (R), le long duquel un véhicule de travail se déplace sur la base des données de terrain et des paramètres de travail de déplacement (F) ;
- une unité d'attente d'itinéraire (24) qui est configurée pour déduire des informations d'attente d'itinéraire (E) au sujet de l'itinéraire de voyage généré (R) ; et
- une unité de commande d'affichage (25) qui est configurée pour amener un dispositif d'affichage (11) capable d'afficher des informations afin d'afficher la forme de terrain (F) acquise, l'itinéraire de voyage généré (R) et les informations d'attente d'itinéraire (E) déduites ;
**caractérisé en ce que** le dispositif de génération d'itinéraire de voyage comprend en outre :
- une unité d'assignation de recommandation (26) configurée pour assigner collectivement, sur la base d'une opération manuelle d'un bouton de recommandation (32) sur le dispositif de saisie (10), des paramètres recommandés avec lesquels l'itinéraire de voyage (R) a une distance la plus courte, les paramètres recommandés étant générés en tant que paramètres de travail de déplacement (P).

2. Dispositif de génération d'itinéraire de voyage selon la revendication 1, dans lequel l'unité d'attente d'itinéraire (24) est configurée pour déduire une distance de travail escomptée (ED) au sujet de l'itinéraire de voyage (R) à générer en tant qu'informations d'attente d'itinéraire (E) et l'unité de commande d'affichage (25) est configurée pour amener le dispositif d'affichage (11) à afficher la distance de travail escomptée déduite (ED).

3. Dispositif de génération d'itinéraire de voyage selon la revendication 1 ou 2, dans lequel l'unité de réglage (22) permet le réglage d'une vitesse de véhicule en déplacement (D5) en tant que partie des paramètres de travail de déplacement (P), l'unité d'attente d'itinéraire (24) est configurée pour déduire un temps de travail escompté (ET) au sujet de l'itinéraire de voyage (R) à générer sur la base de la vitesse de véhicule en déplacement (D5) en tant qu'informations d'attente d'itinéraire (E) et l'unité de commande d'affichage (25) est configurée pour amener le dispositif d'affichage (11) à afficher le temps de travail escompté déduit (ET).

4. Dispositif de génération d'itinéraire de voyage selon une quelconque des revendications 1 à 3, comprenant en outre une unité d'assignation précédente (27) capable d'assigner collectivement, sur la base d'une opération manuelle, des paramètres précédentes qui ont été précédemment utilisés en tant que paramètres de travail de déplacement (P).

5. Dispositif de génération d'itinéraire de voyage selon une quelconque des revendications 1 à 4, comprenant en outre une unité de détermination de collision (28) qui est configurée pour déterminer si ou non il y a une possibilité de collision (C) afin d'entrer en collision avec une partie du terrain lorsque le véhicule de travail se déplace actuellement le long de l'itinéraire de voyage (R), dans lequel lorsque l'unité de détermination de collision (28) détermine que la possibilité de collision (C) est présente, l'unité de commande d'affichage (25) est configurée pour amener le dispositif d'affichage (11) à afficher la possibilité de collision (C) déterminée par l'unité de détermination de collision (28).

6. Dispositif de génération d'itinéraire de voyage selon une quelconque des revendications 1 à 5, comprenant en outre le dispositif de saisie (10) et le dispositif d'affichage (11).

7. Procédé de fonctionnement d'un dispositif de génération d'itinéraire de voyage (6), comprenant:
- acquérir des données de travail comprenant une forme de terrain (F) par une unité d'acquisition (21) ;
- régler, par une unité de réglage (22), des paramètres de travail de déplacement (P) comprenant des informations de bandeau sur la base d'une opération manuelle d'un dispositif de saisie (10) ;
- générer, par une unité de génération (23), un itinéraire de voyage (R) le long duquel un véhicule de travail se déplace sur la base des données de terrain et des paramètres de travail de déplacement (P) ;
- déduire, par une unité d'attente d'itinéraire (24), des informations d'attente d'itinéraire (E) au sujet de l'itinéraire de voyage généré (R) ; et
- amener, par une unité de commande d'affichage (25), un dispositif d'affichage (11) capable d'afficher des informations afin d'afficher la forme de terrain (F) acquise, l'itinéraire de voyage généré (R) et les informations d'attente d'itinéraire (E) déduites ;
**caractérisé en ce que** le procédé comprend en outre de :
- assigner collectivement, par une unité d'assignation de recommandation (26), sur la base d'une opération manuelle d'un bouton de recommandation (32) sur le dispositif de saisie (10), des paramètres recommandés avec lesquels l'itinéraire de voyage (R) a une distance la plus courte, les paramètres recommandés étant générés en tant que paramètres de travail de déplacement (P).
